# EUROPÄISCHE PATENTSCHRIFT

(11) **EP 3 524 334 B1**
(45) Veröffentlichungstag und Bekanntmachung des Hinweises auf die Patenterteilung: **20.01.2021**
(21) Anmeldenummer: 19156728.8
(22) Anmeldetag: 12.02.2019
(51) Int. Cl.: B01D 46/24, B01D 46/00, B01D 46/52

(54) **BAUSATZ AUS GRUNDKÖRPER UND ENDSTÜCK EINER STRÖMUNGSLEITVORRICHTUNG, FILTERANLAGE UND VERFAHREN ZUM REINIGEN**
SET OF BASE BODY AND END PIECE OF SPLIT FLOW GUIDANCE DEVICE, FILTER ASSEMBLY AND METHOD FOR CLEANING
KIT CONSTITUÉ DU CORPS DE BASE ET DE L'EXTRÉMITÉ D'UN DISPOSITIF DE CONDUITE D'ÉCOULEMENT, INSTALLATION FILTRANTE ET PROCÉDÉ DE NETTOYAGE

(30) Priorität: 13.02.2018 DE 102018103157
(43) Veröffentlichungstag der Anmeldung: 14.08.2019
(73) Patentinhaber: Camfil APC GmbH, 78532 Tuttlingen (DE)
(72) Erfinder: Dr. HANDTE, Jakob, 78532 Tuttlingen (DE); BISOGNI, Dominick, 78532 Tuttlingen (DE); HUCKABY, Randilyne, 78532 Tuttlingen (DE); LISTENBEE, Ryan, 78532 Tuttlingen (DE); SIMINO, Adam, 78532 Tuttlingen (DE); WELLS, Alex, 78532 Tuttlingen (DE); VANGILDER, Daniel, 78532 Tuttlingen (DE)
(74) Vertreter: Winter, Brandl, Fürniss, Hübner, Röss, Kaiser, Polte - Partnerschaft mbB

(56) Entgegenhaltungen:
- WO-A1-2008/116455
- CN-A- 105 396 392
- CN-U- 205 287 916
- DE-A1- 4 242 991
- DE-T2- 69 602 268
- US-A1- 2015 182 897

## Beschreibung

Die Erfindung betrifft einen Bausatz aus einem Endstück und einer Filterpatrone zum Entfernen von Verunreinigungen aus einem zu filternden Rohgasstrom. Die Filterpatrone besitzt ein zylindrisches Filterelement, beispielsweise aus Filtermaterial, in dem ein Filtereinsatz aus Filtermaterial eingesetzt ist, wobei zwischen dem Filterelement und dem Filtereinsatz ein beispielsweise ringförmiger Innenraum gebildet ist, wobei das Filtermaterial ausgelegt ist, um bei Beaufschlagen mit einem Druckluftstrom entgegen einer Durchströmrichtung des Rohgasstroms gereinigt zu werden. Die Filterpatrone besitzt einen Grundkörper einer Strömungsleitvorrichtung mit einer zum Leiten des Druckluftstroms ausgelegten Oberfläche. Ferner betrifft die Erfindung eine Filteranlage zum Entfernen von Verunreinigungen aus einem zu filternden Rohgasstrom, mit einem Gehäuse, in dem zumindest eine solche Filterpatrone angeordnet ist, und mit einem Endstück, das an dem Gehäuse befestigt ist, wobei eine axiale Endfläche des Endstücks einer ersten axialen Endfläche des Grundkörpers der Filterpatrone zugewandt angeordnet ist. Außerdem betrifft die Erfindung ein Verfahren zum Reinigen einer solchen Filterpatrone, vorzugsweise in einer solchen Filteranlage, wobei ein Druckluftstrom von einer Düse eines Drucklufttanks der Filteranlage ausgestoßen wird, der danach die Strömungsleitvorrichtung, die den Grundkörper und das Endstück aufweist, anströmt und durch die Außenform der Strömungsleitvorrichtung so aufgeweitet wird, dass er zumindest 80% des Filtermaterials des Filterelements erfasst.

Aus dem Stand der Technik sind bereits Filterpatronen bekannt. Zum Beispiel offenbart die US 5,972,059 eine Luftfilteranordung mit einem zylindrischen Luftfilterelement, mit einem Basiselement, das eine darin ausgebildete Öffnung aufweist, mit einem oberen Element, das eine darin ausgebildete Öffnung aufweist, wobei die Öffnung des oberen Elements dem einen Ende des zylindrischen Luftfilterelements gegenüberliegend angeordnet ist, wobei die Öffnung des Basiselements dem anderen Ende des zylindrischen Luftfilterelements gegenüberliegend angeordnet ist, mit einem gestreckten konischen Filterelement, das einen Kopfabschnitt aufweist, wobei sich die in Längsrichtung äußere Wand des konischen Filterelements dem größten Teil der in Längsrichtung inneren Wand des zylindrischen Filterelements gegenüberliegend erstreckt, wobei die Öffnung des Basiselements dem Basisabschnitt des konischen Filterelements gegenüberliegend angeordnet ist, und mit Mitteln zum Befestigen des Kopfabschnitts des konischen Filterelements an der inneren Wand des zylindrischen Filterelements, wobei zu filternde Luft in den Innenbereich des konischen Filterelements durch den Basisabschnitt davon geführt wird, wobei die Luft durch die Wände des konischen Filterelements in den Raum zwischen der äußeren Wand des konischen Filterelements und der inneren Wand des konischen Filterelements hindurch strömt, wobei die zu reinigende Luft ferner durch die Wände des zylindrischen Filterelements in den Raum zwischen der äußeren Wand des konischen Filterelements und der inneren Wand des zylindrischen Filterelements hindurch strömt, und wobei die Luft in dem Raum saubere Luft ist, die durch die Öffnung in dem oberen Element herausströmt. Es wird also eine Filterpatrone offenbart, bei der die zu reinigende Luft sowohl durch die äußere Wand des zylindrischen Elements nach innen als auch durch die innere Wand des konischen Filterelements nach außen jeweils in den Innenraum zwischen dem konischen Filterelement und dem zylindrischen Filterelement geführt wird und dadurch gereinigt wird.

Auch ist aus der WO 2008/116455 A1 eine Filterpatrone bekannt, die einen durch ein Filterelement gebildetes ringförmiges Filtervolumen aufweist, wobei das Filterelement zur Abreinigung von einer Ringspaltdüse mit Druckluft beaufschlagt wird.

Der Stand der Technik hat jedoch immer den Nachteil, dass eine Filterpatrone regelmäßig ausgetauscht werden muss und daher für jede Ersatzfilterpatrone eine neue Strömungsleitvorrichtung hergestellt werden muss, auch wenn diese eine längere Lebensdauer besitzt als das Filtermaterial der Filterpatrone und somit noch nicht ausgetauscht werden müsste. Außerdem gibt es Filterpatronen, bei denen die Strömungsleitvorrichtung in Axialrichtung aus der Filterpatrone herausragt. Dies erschwert bzw. verhindert ein Austauschen der Filterpatrone, da ein Filteranlagengehäuse, in dem die Filterpatrone angeordnet ist, zumeist möglichst kompakt ausgebildet ist, so dass hervorstehende Teile einer Filterpatrone eine größere Öffnung im Gehäuse zum Tauschen der Filterpatrone erforderlich machen.

Es ist also die Aufgabe der Erfindung, die Nachteile aus dem Stand der Technik zu vermeiden oder wenigstens zu verringern. Insbesondere soll eine Filterpatrone entwickelt werden, die kostengünstig herstellbar ist, vielseitig einsetzbar ist und die Verwendung in einem kompaktbauenden Gehäuse ermöglicht.

Die Aufgabe der Erfindung wird durch einen Bausatz mit einer Filterpatrone und einem Endstück mit den Merkmalen des Anspruchs 1 gelöst. Demnach bildet der Grundkörper in Zusammenwirken mit dem Endstück eine Strömungsleitvorrichtung zum Leiten des Druckluftstroms, wobei der Grundkörper einen distalen Endbereich besitzt, der vorbereitet ist, um durch das filterpatronen-separate und an einem externen Gehäuse befestigbare Endstück zur Strömungsleitung des Druckluftstroms vervollständigt zu werden.

Mit anderen Worten betrifft die Erfindung eine Filterpatrone zum Entfernen von Verunreinigungen aus einem zu filternden Rohgasstrom, mit einem zylindrischen Filterelement aus Filtermaterial, in dem ein Filtereinsatz eingesetzt ist, wobei zwischen dem Filterelement und dem Filtereinsatz ein Innenraum gebildet ist, wobei das Filtermaterial ausgelegt ist, um bei Beaufschlagen mit einem Druckluftstrom entgegen einer Durchströmrichtung des Rohgasstroms gereinigt zu werden, wobei ein Strömungsleitvorrichtungsabschnitt vorhanden ist, der durch einen anderen Strömungsleitvorrichtungsabschnitt, der nicht Teil der Filterpatrone ist, zum Strömungsleiten vervollständigt wird. Das heißt, dass der Strömungsleitvorrichtungsabschnitt der Filterpatrone unvollständig ist. Das heißt auch, dass der Strömungsleitvorrichtungsabschnitt der Filterpatrone so ausgebildet und angeordnet ist, dass er (nur) in Zusammenwirken mit dem anderen Strömungsleitvorrichtungsabschnitt den Druckluftstrom leitet, d.h., die Funktion, den Druckluftstrom zu leiten, erfüllt.

Der Grundkörper ist der Strömungsleitvorrichtungsabschnitt, der an der Filterpatrone befestigt ist; er ist also Teil der Filterpatrone. Das Endstück ist der andere Strömungsleitvorrichtungsabschnitt, der nicht an der Filterpatrone, sondern an einem externen Gehäuse befestigt ist. Gemeinsam erfüllen der Grundkörper und das Endstück die Funktion der Strömungsleitvorrichtung zum Leiten des Druckluftstroms.

Dies hat den Vorteil, dass durch die zweigeteilte Ausführung der Strömungsleitvorrichtung ein Austauschen einer Filterpatrone ermöglicht wird, wobei ein Teil (nämlich das Endstück) in dem Gehäuse verbleibt. Dadurch kann die Filterpatrone beispielsweise in Horizontalrichtung herausgezogen werden (zum Beispiel über Halteschienen), da ein in Axialrichtung aus der Filterpatrone herausstehender Teil der Strömungsleitvorrichtung, d.h. das Endstück, in dem Gehäuse verbleibt und die Filterpatrone somit bündig an einem axialen Ende des Filterelements endet/abschließt. Außerdem ist es vorteilhafterweise möglich, dass nur ein der Grundkörper der Strömungsleitvorrichtung ersetzt werden muss und dass das Endstück wiederverwendet werden kann, was sich günstig auf die Herstellungskosten der (Ersatz-)Filterpatrone auswirkt und das Austauschen der Filterpatrone erleichtert.

Vorteilhafte Ausführungsformen werden in den Unteransprüchen beansprucht und werden nachfolgend näher erläutert.

Zudem ist es zweckmäßig, wenn die Oberfläche des Grundkörpers, insbesondere eine radiale Außenfläche, so ausgeformt und angeordnet ist, dass sie in eine Außenoberfläche, insbesondere eine radiale Außenfläche, des Endstücks nahtlos und/oder stufenlos und/oder steigungskonform und/oder krümmungskonform übergeht. Dabei heißt steigungskonform, dass die Steigung der Oberfläche des Grundkörpers und die Steigung der Außenoberfläche des Endstücks an dem Punkt des Übergangs (der (Außen-)Oberflächen) dieselbe ist. Dabei heißt krümmungskonform, dass die Krümmung der Oberfläche des Grundkörpers und die Krümmung der Außenoberfläche des Endstücks an dem Punkt des Übergangs (der (Außen-)Oberflächen) dieselbe ist. Dadurch wird ermöglicht, dass die Strömung des Druckluftstroms bei minimalem Energieverlust an den Oberflächen entlanggeleitet wird.

Außerdem ist es vorteilhaft, wenn der Übergang der Oberfläche des Grundkörpers in die Außenoberfläche des Endstücks derart ist, dass die Strömung des Druckluftstroms während des Reinigens an einer Gesamtoberfläche des Grundkörpers und des Endstücks anliegt, um im Reinigungsfall wenigstens 80%, bevorzugt mehr als 90%, weiter bevorzugt mehr als 95%, besonders bevorzugt 100%, des Filtermaterials des Filterelements zu erreichen. Der Grundkörper und das Endstück liegen also derart an, dass ihre Oberflächen eine Gesamtoberfläche bilden, an der die Strömung des Druckluftstroms entlanggeleitet wird, und dadurch aufgeweitet wird, so dass die Strömung das Filtermaterial erfasst.

Weiterhin ist es bevorzugt, wenn (nur) der Grundkörper, also nur ein Abschnitt bzw. ein Teil der Strömungsleitvorrichtung, an dem Filtermaterial, beispielsweise an dem Filtereinsatz, befestigt ist. D.h. im Umkehrschluss, dass zumindest ein Teil der Strömungsleitvorrichtung, nämlich das Endstück, nicht an dem Filtermaterial und/oder nicht an der Filterpatrone befestigt ist. Dadurch werden die auszutauschenden Bestandteile beim Tausch einer Filterpatrone reduziert.

Eine weitere Funktion, welche über die Strömungsleitvorrichtung erfüllt wird, ist das Erden der Filterpatrone mit dem Gehäuse. Dies ist insbesondere bei explosiven Stäuben bei Verwendung von antistatischem Filtermaterial erforderlich und sicherheitsrelevant. Hierfür wird das Filtermaterial elektrisch leitend mit der Kappenhälfte an der Filterpatrone, also mit dem Grundkörper, verbunden. Das Gehäuse ist elektrisch leitend mit der Kappenspitze/dem Endstück, die/das sich im Filtergehäuse befindet, verbunden. Bei Montage der Filterpatrone wird ein elektrischer Kontakt zwischen beiden Kappenstücken, also zwischen dem Grundkörper und dem Endstück, beispielsweise über eine Feder oder einen Formschluss hergestellt und die elektrische Spannung kann aus der Filterpatrone in das Gehäuse abfließen.

Über den gleichen Mechanismus kann bei der Montage der Filterpatrone und beim Zusammenführen der Kappenstücke durch ein Schließen des Stromkreises sichergestellt werden, dass nur die für den Einsatzfall richtigen Patronen eingesetzt werden.

Alternativ kann auch über eine RFID-Technologie, welche als Sender und Empfänger in dem Endstück und dem Grundkörper der Strömungsleitvorrichtung verbaut wird, gelöst werden, dass bei Fehlbestücken die Anlage gesperrt wird.

Über die Strömungsleitvorrichtung kann über einen elektrischen Kontakt an der Trennstelle die Erdung der Filterpatrone durchgeführt werden.

Ferner ist es dabei von Vorteil, wenn elektrisch leitende Elemente im Grundkörper (und am Endstück) zum Erden vorhanden sind, die so ausgelegt sind, dass eine Erdung der Filterpatrone gegenüber dem Gehäuse erfolgt. Insbesondere ist es von Vorteil, wenn die elektrisch leitenden Elemente als federnde Kontaktelektroden ausgebildet sind. Alternativ ist es möglich, Formschlusselemente wie Stecker oder eine Profilierung in der Berührungsfläche/Kontaktfläche zu dem Endstück vorzusehen.

Außerdem ist es zweckmäßig, wenn der Grundkörper einen Empfänger oder einen Sender mit RFID-Technologie zum Überprüfen einer passenden Filterpatrone und/oder zum Überprüfen einer Positionierung der Filterpatrone aufweist. Dadurch kann in einfacher Weise überprüft werden, ob eine passende Filterpatrone in die Filteranlage eingesetzt wurde und/oder ob die Filterpatrone richtig positioniert ist. Der Empfänger oder Sender des Grundkörpers ist ausgelegt, um mit einem korrespondierenden Sender oder Empfänger im Endstück zu kommunizieren. Alternativ kann die Überprüfung auch durch das Schließen eines elektrischen Kreises und/oder durch einen mechanischen Formschluss beim Anpressen des Grundkörpers an das Endstück bzw. beim Anpressen der Filterpatrone an das Filtergehäuse erfolgen.

Gemäß einer bevorzugten Ausführungsform kann der Filtereinsatz insbesondere während der Montage zentriert zum Filterelement ausgerichtet werden. Die Filterpatrone wird gegen eine Zentriervorrichtung gedrückt, die einen ersten Zentrierabschnitt zum Ausrichten des Filterelements zentriert zu der Zentriervorrichtung und einen zweiten Zentrierabschnitt zum Ausrichten des Filtereinsatzes zentriert zu der Zentriervorrichtung umfasst. Zudem ist es vorteilhaft, wenn das Endstück koaxial zur Zentriereinrichtung angeordnet ist. Auch ist es vorteilhaft, wenn das Endstück an der Zentriervorrichtung befestigt ist. Der erste Zentrierabschnitt kann als vorstehender Vorsprung in Axialrichtung ausgebildet werden. Der erste Zentrierabschnitt steht in der ersten Axialrichtung hervor. Der erste Zentrierabschnitt umfasst eine konische radiale Außenumfangsfläche. Der erste Zentrierabschnitt verjüngt sich radial nach innen in der ersten Axialrichtung. Der zweite Zentrierabschnitt kann als vorstehender Vorsprung in Axialrichtung ausgebildet werden. Der zweite Zentrierabschnitt steht in der ersten Axialrichtung hervor. Der zweite Zentrierabschnitt umfasst eine konische radiale Außenumfangsfläche. Der zweite Zentrierabschnitt verjüngt sich radial nach innen in der ersten Axialrichtung. Während der Montage, wenn die Filterpatrone gegen die Zentriervorrichtung gedrückt wird, wird eine radiale innere Umfangsfläche des Filterelements durch den ersten Zentrierabschnitt zu einer Position geführt, die zu der Zentriervorrichtung zentriert ist, d.h. eine Position, die zu dem Endstück zentriert ist. Während der Montage, wenn die Filterpatrone gegen die Zentriervorrichtung gedrückt wird, wird eine radiale innere Umfangsfläche des Filtereinsatzes durch den zweiten Zentrierabschnitt zu einer Position geführt, die zu der Zentriervorrichtung zentriert ist, d.h. eine Position, die zu dem Endstück zentriert ist.

Die geteilte Strömungsleitvorrichtung übernimmt über die Kontaktfläche zwischen dem Endstück und dem Grundkörper zusätzliche Funktionen wie eine Erdung des Filterelementes bzw. der Filterpatrone gegenüber dem Filtergehäuse, Überprüfung der Positionierung der Filterpatrone im Gehäuse, Sicherstellung und Überprüfung des Vorhandenseins der richtigen Filterpatrone im Filtergehäuse, beispielsweise mechanisch, über eine RFID-Technologie und/oder elektrisch.

Ferner ist es vorteilhaft, wenn eine Umlaufkante einer ersten axialen Endfläche (an einem ersten axialen Ende) des Grundkörpers, vorzugsweise vollständig, in einer Ebene liegt, in der eine axiale Endfläche des Filterelements angeordnet ist. Dadurch wird vorteilhafterweise gewährleistet, dass die Filterpatrone an der axialen Endfläche des Filterelements in Axialrichtung bündig abschließt/endet, so dass keine Bestandteile der Filterpatrone in Axialrichtung aus dem Filterelement herausragen.

Zudem ist es zweckmäßig, wenn die Umlaufkante des Grundkörpers die Form eines Kreises aufweist. Dadurch kann die Strömung gleichmäßig in Radialrichtung aufgeweitet werden.

Außerdem ist es vorteilhaft, wenn der Grundkörper als Kegelstumpf oder als Parabelstumpf ausgebildet ist. So kann er besonders energieverlustarm die Strömung des Druckluftstroms, die in Axialrichtung auf den Grundkörper auftrifft, entlang seiner Oberfläche aufweiten.

Ferner ist es von Vorteil, wenn ein Außendurchmesser des Grundkörpers von der ersten axialen Endfläche des Grundkörpers zu einer zweiten axialen Endfläche, die der ersten axialen Endfläche des Grundkörpers gegenüberliegt, zunimmt. So kann ein Druckluftstrom vorteilhafterweise entlang der Oberfläche des Grundkörpers radial nach außen geleitet, also aufgeweitet, werden.

Besonders bevorzugt ist es, wenn die Steigung des Außendurchmessers des Grundkörpers von der ersten axialen Endfläche zu der zweiten axialen Endfläche des Grundkörpers abnimmt. Dadurch wird erreicht, dass der Druckluftstrom zuerst stärker aufgeweitet wird und mit zunehmender Axiallänge sanfter, d.h. weniger stark, nach außen geleitet wird.

Außerdem ist es günstig, wenn der Grundkörper hohlwandig oder als Vollkörper ausgebildet ist. D.h., es ist insbesondere von Bedeutung, wie die Oberfläche des Grundkörpers geformt ist.

Weiterhin ist es zweckmäßig, wenn die erste axiale Endfläche des Grundkörpers eben oder konkav ist. D.h., dass der Grundkörper in Axialrichtung nicht aus dem Filterelement herausragt, sondern bündig mit der axialen Endfläche des Filterelements abschließt oder nach innen gewölbt ist.

Die Aufgabe der Erfindung wird auch durch einen Bausatz aus einem Endstück und einer erfindungsgemäßen Filterpatrone zum Entfernen von Verunreinigungen aus einem zu filternden Rohgasstrom gelöst, wobei die Filterpatrone ein zylindrisches Filterelement aus Filtermaterial, in dem ein Filtereinsatz aus Filtermaterial eingesetzt ist, wobei zwischen dem Filterelement und dem Filtereinsatz ein Innenraum gebildet ist, wobei das Filtermaterial ausgelegt ist, um bei Beaufschlagen mit einem Druckluftstrom entgegen einer Durchströmrichtung des Rohgasstroms gereinigt zu werden, und einen Grundkörper aufweist, wobei der Grundkörper in Zusammenwirken mit dem Endstück eine Strömungsleitvorrichtung zum Leiten des Druckluftstroms bildet.

Weiterhin wird die Aufgabe der Erfindung wird auch durch eine Filteranlage zum Entfernen von Verunreinigungen aus einem zu filternden Rohgasstrom, mit einem Gehäuse, in dem zumindest eine erfindungsgemäße Filterpatrone angeordnet ist, und mit einem Endstück, das an dem Gehäuse befestigt ist, wobei eine axiale Endfläche des Endstücks einer ersten axialen Endfläche des Grundkörpers der Filterpatrone zugewandt angeordnet ist.

Bevorzugterweise weist die Filteranlage einen Drucklufttank, der zumindest eine Düse aufweist und ausgelegt ist, um den Druckluftstrom zum Beaufschlagen des Filtermaterials auszustoßen, auf.

Zudem ist es vorteilhaft, wenn die Umlaufkante der ersten axialen Endfläche des Grundkörpers die Form eines Kreises aufweist, dessen Außendurchmesser dem Außendurchmesser einer Umlaufkante einer axialen Endfläche des Endstücks entspricht.

Besonders bevorzugt ist es, wenn das Endstück die Form einer um die Längsachse rotierten Parabel besitzt. Besonders bevorzugt ist es, wenn das Endstück und der Grundkörper gemeinsam die Form einer um die Längsachse rotierten Parabel besitzen, wobei das Endstück ein oberer Teil des Parabelkörpers ist und der Grundkörper ein unterer Teil des Parabelkörpers ist.

Weiterhin ist es bevorzugt, wenn die erste axiale Endfläche des Grundkörpers an der axialen Endfläche des Endstücks anliegt. Dadurch wird ein gemeinsamer Körper gebildet, der die Strömungsleitvorrichtung darstellt.

Zusätzlich ist es von Vorteil, wenn das Endstück und der Grundkörper so angeordnet sind, dass eine Außenform des Endstücks stufenlos in eine Außenform des Grundkörpers übergeht.

Die Aufgabe der Erfindung wird auch durch ein Verfahren zum Reinigen einer erfindungsgemäßen Filterpatrone, vorzugsweise in einer solchen Filteranlage, gelöst, wobei ein Druckluftstrom von einer Düse eines Drucklufttanks der Filteranlage ausgestoßen wird, der danach die Strömungsleitvorrichtung, die den Grundkörper und das Endstück aufweist, anströmt und durch die Außenform der Strömungsleitvorrichtung so aufgeweitet wird, dass er zumindest 80%, bevorzugt mehr als 90%, weiter bevorzugt mehr als 95%, besonders bevorzugt 100%, des Filtermaterials des Filterelements erfasst.

Nach einem weiteren Aspekt der Erfindung, der unabhängig von den vorstehenden Ausführungsformen ist, aber vorzugsweise auch mit Merkmalen der oben genannten Ausführungsformen kombiniert werden kann, betrifft die Erfindung eine Filterpatrone zum Entfernen von Verunreinigungen aus einem zu filternden Rohgasstrom, mit einem zylindrischen Filterelement aus Filtermaterial, in dem ein Filtereinsatz, beispielsweise aus Filtermaterial oder aus einem luftundurchlässigen Material, eingesetzt ist, wobei zwischen dem Filterelement und dem Filtereinsatz, d. h. innerhalb der Filterpatrone, ein vorzugsweise ringförmiger Innenraum gebildet ist, wobei das Filtermaterial ausgelegt ist, um bei Beaufschlagen mit einem Druckluftstrom entgegen einer Durchströmrichtung des Rohgasstroms gereinigt zu werden, wobei eine als Strömungsleitvorrichtung ausgebildete Kappe vorhanden ist, die so angeordnet und bzgl. ihrer Außenform ausgebildet ist, dass der Druckluftstrom durch die Kappe so aufgeweitet wird, dass das gesamte Filtermaterial des Filterelements vom Druckluftstrom erfasst wird und ein dabei auftretender Energieverlust klein gehalten wird. Dies hat den Vorteil, dass zum einen der Druckluftstrom so geführt wird, dass das gesamte Filtermaterial oder zumindest das gesamte Filtermaterial des zylindrischen Filterelements erfasst wird und nicht nur ein unterer Teil des Filterelements vom Druckluftstrom erfasst wird. Zum anderen wird durch die geeignete Ausbildung der Außenform der Kappe erreicht, dass die Energie des Druckluftstroms beim Aufweiten nur minimal, d.h. so weit wie notwendig, verringert wird. Bei einer erfindungsgemäßen Filterpatrone lässt sich also sowohl die Standzeit der Patrone dadurch verlängern, dass die Filterpatrone durch das verbesserte Abreinigungsergebnis schonender abgereinigt werden kann und weniger häufig abgereinigt werden muss, als auch dadurch, dass Druckluft eingespart werden kann, so dass die Kosten der Abreinigung erheblich verringert werden können.

Zudem ist es zweckmäßig, wenn der auftretende Energieverlust kleiner 40 %, bevorzugt kleiner 20 %, weiter bevorzugt kleiner 10 % ist.

Im Folgenden wird eine Richtung, die parallel zu einer Zentralachse der Filterpatrone (bzw. des Filterelements bzw. des Filtereinsatzes bzw. der Kappe) ist, als eine Axialrichtung bezeichnet. Im Folgenden wird eine Richtung, die eine Axialrichtung ist und in die der Druckluftstrom strömt, als eine erste Axialrichtung bezeichnet. Eine Richtung, die der ersten Axialrichtung entgegen gerichtet ist, wird als eine zweite Axialrichtung bezeichnet. Der Rohgasstrom strömt also in der zweiten Axialrichtung in die Filterpatrone ein, während der Druckluftstrom in der ersten Axialrichtung in die Filterpatrone einströmt.

Im Folgenden wird das eine axiale Ende der Filterpatrone (bzw. des Filterelements bzw. des Filtereinsatzes bzw. der Kappe), das der ersten Axialrichtung zugewandt ist, als ein erstes axiales Ende bezeichnet und das andere axiale Ende der Filterpatrone (bzw. des Filterelements bzw. des Filtereinsatzes bzw. der Kappe), das der zweiten Axialrichtung zugewandt ist, wird als ein zweites axiales Ende bezeichnet.

Ferner ist es vorteilhaft, wenn die Kappe zumindest teilweise in dem Innenraum der Filterpatrone angeordnet ist. Dadurch wird vermieden, dass die axiale Länge der Filterpatrone durch die Kappe erhöht wird.

Außerdem ist es vorteilhaft, wenn der Innenraum der Filterpatrone über die Axiallänge des Filtereinsatzes und/oder des Filterelements gesehen einen zumindest abschnittsweise konstanten Ringquerschnitt aufweist. Zum einen kann dadurch das Volumen des Innenraums im Vergleich zu einem Innenraum bei einem nicht konstanten Ringquerschnitt, der bspw. bei einem konischen Filtereinsatz erreicht wird, minimiert werden, so dass es einfacher ist, einen höheren Druck in dem Innenraum der Filterpatrone zu erzeugen. Gleichzeitig kann dabei die Filterfläche der Filterpatrone gesteigert werden.

Ferner ist es von Vorteil, wenn der Innenraum über die gesamte Axiallänge des Filtereinsatzes und/oder des Filterelements einen konstanten Ringquerschnitt aufweist. So wird zusätzlich das Abreinigungsergebnis verbessert, da der Querschnitt gleich bleibt und somit der Druckluftstrom über die Axiallänge des Filtereinsatzes nicht weiter aufgeweitet werden muss, was einen zusätzlichen Energieverlust des Druckluftstroms verhindert.

Ein günstiges Ausführungsbeispiel zeichnet sich dadurch aus, dass der Filtereinsatz einen zylindrischen Außendurchmesser aufweist. Zum einen können dadurch die oben genannten Vorteile erreicht werden, und zum anderen wird der Aufbau der Filterpatrone dadurch erheblich vereinfacht.

Zusätzlich ist es bevorzugt, wenn die Außenform der Kappe konvex, vorzugsweise streng konvex, ausgebildet ist. Das heißt, dass sich die Kappe dem Druckluftstrom entgegen wölbt. Das heißt also auch, dass die Kappe von dem Filtereinsatz aus gesehen sich nach außen wölbt bzw. nach außen gewölbt ist. Dadurch wird eine besonders günstige Strömungsumleitung beim Auftreffen des Druckluftstroms auf die Außenform der Kappe erzielt. Insbesondere ist die Ausbildung hinsichtlich einer Minimierung des Energieverlusts und hinsichtlich einer Aufweitung des Druckluftstroms auf den gewünschten Durchmesser des Innenraums bevorzugt.

Auch ist es vorteilhaft, wenn die Kappe an einem axialen Ende des Filtereinsatzes angeordnet ist. Besonders bevorzugt ist es auch, wenn die Kappe an dem Filtereinsatz, insbesondere an einer axialen Endfläche des Filtereinsatzes, befestigt ist. Besonders bevorzugt ist es, wenn ein Querschnitt der Kappe in einen Querschnitt des Filtereinsatzes übergeht, d.h. dass ein Außendurchmesser der Kappe einem Außendurchmesser des Filtereinsatzes an dem Stelle, an dem die Kappe an dem Filtereinsatz anliegt, entspricht. Das heißt auch, dass der Außendurchmesser der Kappe an dem zweiten axialen Ende der Kappe dem Außendurchmesser des Filtereinsatzes an dem ersten axialen Ende des Filtereinsatzes entspricht. Dadurch wird vorteilhafterweise erreicht, dass der Druckluftstrom an der Kappe und danach an der Außenseite des Filtereinsatzes entlangströmen kann.

Ein günstiges Ausführungsbeispiel zeichnet sich also dadurch aus, dass ein Außendurchmesser an einem dem Filtereinsatz zugewandten Ende der Kappe, also an dem zweiten axialen Ende der Kappe, im Wesentlichen dem Außendurchmesser an einem der Kappe zugewandten Ende des Filtereinsatzes, also an dem ersten axialen Ende des Filtereinsatzes, entspricht. Die Außenform der Kappe geht also quasi "nahtlos" in den Filtereinsatz über.

Außerdem ist es vorteilhaft, wenn die Kappe und die Filterpatrone und/oder das Filterelement und/oder der Filtereinsatz koaxial angeordnet sind. Dadurch kann eine gleichmäßige Strömung des Druckluftstroms erwirkt werden.

Ferner ist es bevorzugt, wenn die Kappe beispielsweise je nach Gewichts- oder Steifigkeitsanforderungen aus einem Vollmaterial oder hülsenartig/schalenartig ausgebildet ist.

Insbesondere ist es vorteilhaft, wenn die Außenform der Kappe einer Parabelfunktion bzw. einer Wurzelfunktion folgt. Das heißt, dass eine Außenkontur der Kappe von einem ersten axialen Ende der Kappe, an dem die Krümmung der Kappe am größten ist, bis zu ihrem zweiten axialen Ende, das in Axialrichtung dem ersten axialen Ende gegenüberliegt, einer Wurzelfunktion folgt. Das heißt also auch, dass die Kappe rotationssymmetrisch ausgebildet ist, wobei die Kappe durch Rotation einer Parabel um ihre Längsachse gebildet wird. Das bedeutet also, dass jeder Längsquerschnitt der Kappe parabelförmig ausgebildet ist. Weiter bedeutet es auch, dass jeder Querschnitt der Kappe kreisförmig ist.

Ferner ist die Kappe vorteilhafterweise so ausgebildet, dass eine Steigung der Parabel, der die Außenform der Kappe folgt, in Axialrichtung von dem ersten axialen Ende aus abnimmt. Das bedeutet also, dass der Außendurchmesser der Kappe von dem ersten axialen Ende der Kappe, an dem die Krümmung der Kappe am größten ist, bis zu seinem anderen axialen Ende, dem zweiten axialen Ende, hin in Axialrichtung zunimmt, jedoch mit zunehmender Axiallänge weniger stark im Außendurchmesser zunimmt.

Man könnte auch sagen, dass die Außenform der Kappe so ausgebildet ist, dass ihre Form der Spitze eines Überschallflugzeugs entspricht. Die Kappe weist also eine eierförmige Spitze auf. Mit anderen Worten ist das erste axiale Ende der Kappe stumpf, d.h. nicht spitz, ausgebildet.

Zudem ist es zweckmäßig, wenn die Außenform der Kappe der Funktion f(x) = x^{1/2} (in Worten: x hoch einhalb) folgt. Bei einer Ausbildung der Kappe mit einer solchen Außenform werden besonders günstige Umströmungsverhältnisse geschaffen, die insbesondere für eine Anströmung bei hohen Geschwindigkeiten optimiert ist.

Ferner ist es von Vorteil, wenn die Außenform der Kappe so auf einen Außendurchmesser des Innenraums der Filterpatrone abgestimmt ist, dass der Druckluftstrom bis zu dem Filtermaterial des Filterelements aufgeweitet wird. Dadurch wird der Druckluftstrom dorthin geleitet, wo er durch das Durchströmen des Filtermaterials des Filterelements von innen nach außen, also entgegen der Rohgasstromrichtung, das Filtermaterial abreinigt.

Weiterhin ist es bevorzugt, wenn eine Axiallänge der Kappe 0,5- bis 2-mal so groß wie ein Außendurchmesser des Innenraums der Filterpatrone ist. Weiter bevorzugt beträgt die Axiallänge der Kappe 1,5- bis 1,0-mal der Größe des Außendurchmessers des Innenraums der Filterpatrone. Dadurch wird ein geeigneter Kompromiss/Trade-Off zwischen der Aufweitung des Druckluftstroms und dem Energieverlust des Druckluftstroms beim Auftreffen auf die Kappe erzielt.

Außerdem ist es bevorzugt, wenn die Außenform der Kappe für ein Anströmen einer Strömung mit hoher Geschwindigkeit ausgelegt ist. Das heißt, dass die Außenform der Kappe insbesondere so ausgebildet ist, dass sie beim in Kontakt treten, also beim Anströmen, mit einer Strömung, die sich mit hoher Geschwindigkeit bis zur Überschallgeschwindigkeit ausbreitet, die gewünschte Aufweitung realisiert und gleichzeitig der dadurch entstehende Energieverlust minimiert ist. Eine solche Außenform wird bereits auf anderen Anwendungsgebieten, zum Beispiel auf dem Gebiet der Flugzeugnasen, eingesetzt.

Ferner ist es zweckmäßig, wenn an dem zweiten axialen Ende der Filterpatrone ein Ringbauteil angeordnet ist, das das Filterelement an dem zweiten axialen Ende mit dem Filtereinsatz an dem zweiten axialen Ende verbindet. So wird verhindert, dass sich das gefilterte Rohgas aus dem Innenraum mit dem ungefilterten Rohgas außerhalb der Filterpatrone vermischen kann. Gleichzeitig wird der Filterpatrone dadurch Stabilität gegeben.

Das Ringbauteil ist luftundurchlässig ausgestaltet, so dass es der Filterpatrone zusätzliche Stabilität verleiht, da ein festeres Material verwendet werden kann. Insbesondere werden der Filtereinsatz und das Filterelement in eine Pfanne, die mit Gussmaterial, z.B. Harz, gefüllt wird, eingesetzt und abgedichtet verbunden.

Außerdem ist es zweckmäßig, wenn eine Öffnung an einem ersten axialen Ende der Filterpatrone vorhanden ist, aus dem vorteilhafterweise die gereinigte Luft ausströmen kann. Mit anderen Worten ist das erste axiale Ende das Ende der Filterpatrone, aus dem der gefilterte Rohgasstrom, also der Reingasstrom, austritt. Das zweite axiale Ende der Filterpatrone ist dagegen geschlossen, d.h., dass sich die Luft außerhalb der Filterpatrone nicht mit der Luft innerhalb der Filterpatrone mischen kann. Die Luft kann nur durch Filtermaterial in den Innenraum der Filterpatrone gelangen.

Insbesondere ist es bevorzugt, wenn die Öffnung kreisförmig ausgebildet ist. Ein bevorzugtes Ausführungsbeispiel zeichnet sich auch dadurch aus, dass die Öffnung in den Innenraum der Filterpatrone zwischen dem Filtereinsatz und dem Filterelement übergeht. In Axialrichtung von dem ersten axialen Ende der Filterpatrone aus bis zu dem ersten axialen Ende der Kappe besitzt die Filterpatrone also einen kreisförmigen Querschnitt. Durch die Kappe und den Filtereinsatz, der sich an die Kappe in Axialrichtung anschließt, besitzt der Innenraum der Filterpatrone von dem ersten axialen Ende der Kappe bis zu dem zweiten axialen Ende der Filterpatrone einen ringförmigen Querschnitt. Die Kappe ist dabei also möglichst so ausgebildet, dass der Druckluftstrom sanft, d.h. mit minimiertem Energieverlust, von dem kreisförmigen Querschnitt in den ringförmigen Querschnitt geführt wird, also entlang der Außenform der Kappe aufgeweitet wird.

Die Filterpatrone wird in einem Filterbetrieb, in dem der zu filternde Rohgasstrom durch das Filtermaterial strömt, so betrieben, dass die Filterpatrone von ihrem zweiten axialen Ende zu ihrem ersten axialen Ende hin durchströmt wird. Das heißt, dass der Rohgasstrom von außen nach innen in den Innenbereich durch das Filterelement, insbesondere das Filtermaterial des Filterelements, hindurchgeführt wird. Auch heißt das, dass der Rohgasstrom, wenn der Filtereinsatz aus Filtermaterial gebildet ist, von innen nach außen in den Innenbereich durch den Filtereinsatz, insbesondere das Filtermaterial des Filtereinsatzes, hindurchgeführt wird. Es ist aber auch möglich, den Filtereinsatz aus einem luftundurchlässigen/nicht durchströmbaren Material auszubilden, so dass der Filtereinsatz als ein Verdrängungskörper fungiert, der das Abreinigungsergebnis verbessert.

Außerdem ist die Filterpatrone in einem bevorzugten Ausführungsbeispiel so ausgelegt, dass der Rohgasstrom als ein Reingasstrom aus dem Filtermaterial heraustritt. Das heißt, dass der gesamte Innenraum der Filterpatrone eine Reingaskammer bildet, die von dem Filtermaterial des Filterelements und des Filtereinsatzes umgeben ist und die das gefilterte Rohgas beinhaltet, bevor es aus der Öffnung herausströmt.

Zudem ist es vorteilhaft, wenn das Filtermaterial des Filterelements und/oder des Filtereinsatzes sternförmig gefaltet ist, d.h. das ein Querschnitt des Filterelements und/oder des Filtereinsatzes sternförmig ist, da es dadurch eine vergrößerte Filteroberfläche aufweist, was sich positiv auf das Filterergebnis auswirkt.

Die Aufgabe der Erfindung wird auch durch eine Filteranlage zum Entfernen von Verunreinigungen auf einem zu filternden Rohgasstrom gelöst, wobei die Filteranlage ein Gehäuse, in dem zumindest eine erfindungsgemäße Filterpatrone angeordnet ist, ein Drucklufttank, der zumindest eine Düse aufweist und ausgelegt ist, um den Druckluftstrom zum Beaufschlagen des Filtermaterials auszustoßen, aufweist.

Insbesondere ist es von Vorteil, wenn der Drucklufttank ausgelegt ist, um einen Druckluftstrom mit einem Druck von 4 bis 8 bar auszustoßen. Dadurch kann ein gutes Abreinigungsergebnis erzielt werden.

Dabei ist die Außenform der Kappe der erfindungsgemäßen Filterpatrone insbesondere sowohl auf den Außendurchmesser des Innenraums, das heißt auf den Innendurchmesser der Filterpatrone, und auf den Abstand zwischen der Düse und der Filterpatrone abgestimmt, also dass der Druckluftstrom durch die Kappe so aufgeweitet wird, dass das gesamte Filtermaterial vom Druckluftstrom erfasst wird und ein dabei auftretender Energieverlust klein gehalten wird. Die Außenform der Kappe ist also sowohl von den Abmaßen der Filterpatrone, insbesondere von einem Außendurchmesser, als auch von einem Abstand zwischen der Düse, aus der der Druckluftstrom ausgestoßen wird, und der Filterpatrone und von der Strömungsgeschwindigkeit des Druckluftstroms bzw. der Energie des Druckluftstroms abhängig.

Durch die Kappe kann der Abstand in Axialrichtung zwischen der Düse und der Filterpatrone verkleinert werden, da der Öffnungswinkel des Freistrahls vergrößert wird und somit auch das Filtermedium/Filtermaterial am Filterpatroneneintritt, d.h. im oberen Teil der Filterpatrone, angereinigt wird.

Besonders vorteilhaft ist es dabei, wenn die Düse so ausgebildet ist, dass der Druckluftstrom mit hoher Geschwindigkeit bis Überschallgeschwindigkeit aus der Düse heraustritt. Insbesondere ist es dabei von Vorteil, wenn die Düse als eine Laval-Düse ausgebildet ist.

Ferner ist es zweckmäßig, wenn der Abstand in Axialrichtung zwischen der Düse und der Filterpatrone kleiner ist als das Dreifache des Außendurchmessers des Innenraums der Filterpatrone, vorzugsweise kleiner als das Zweifache des Außendurchmessers des Innenraums der Filterpatrone, weiter bevorzugt kleiner als das 1,5-fache des Außendurchmessers des Innenraums der Filterpatrone. Dadurch kann also insbesondere der Bauraum der gesamten Filteranlage in Axialrichtung gering gehalten werden.

Zudem ist es zweckmäßig, wenn die Filterpatrone in Horizontalrichtung oder bevorzugt in Vertikalrichtung angeordnet ist. Das heißt, dass die Axialrichtung der Filterpatrone mit einer Horizontalrichtung bzw. einer Vertikalrichtung/Schwerkraftrichtung überein stimmt. Insbesondere bei einer vertikalen Anordnung der Filterpatrone kann der Staub beim Abreinigen in Schwerkraftrichtung nach unten abfallen, ohne sich wieder auf dem Filterelement festzusetzen.

Ein günstiges Ausführungsbeispiel zeichnet sich dadurch aus, dass mehrere Filterpatronen in der Filteranlage angeordnet sind, dadurch kann die Filterleistung der gesamten Filteranlage gesteigert werden.

Zudem ist es von Vorteil, wenn eine Axiallänge des Filtereinsatzes geringer ist als eine Axiallänge des Filterelements. Mit anderen Worten ist der Filtereinsatz vollständig innerhalb des Filterelements angeordnet. D.h., dass er insbesondere in Axialrichtung nicht über die Axiallänge des Filterelements herausragt. Das heißt auch, dass der Filtereinsatz maximal die gleiche Axiallänge wie die Axiallänge des Filterelements haben kann.

Die Erfindung betrifft auch ein Verfahren zum Reinigen/Abreinigen einer erfindungsgemäßen Filterpatrone, die vorzugsweise in einer erfindungsgemäßen Filteranlage angeordnet ist. Das Verfahren beinhaltet die Schritte, dass zuerst ein Druckluftstrom von einer Düse ausgestoßen wird, der danach die Kappe der Filterpatrone anströmt und durch die Außenform der Kappe so aufgeweitet wird, dass er das gesamte Filtermaterial des Filterelements erfasst.

Nach einem weiteren Aspekt der Erfindung, der unabhängig von den vorstehenden Ausführungsformen ist, aber vorzugsweise auch mit Merkmalen der oben genannten Ausführungsformen kombiniert werden kann, betrifft die Erfindung eine Filterpatrone zum Entfernen von Verunreinigungen aus einem zu filternden Rohgasstrom, mit einem zylindrischen Filterelement aus Filtermaterial, in dem ein Filtereinsatz, beispielsweise aus Filtermaterial oder einem luftundurchlässigen Material eingesetzt ist, wobei zwischen dem Filterelement und dem Filtereinsatz ein ringförmiger Innenraum gebildet ist, wobei das Filtermaterial ausgelegt ist, um bei Beaufschlagen mit einem Druckluftstrom entgegen einer Durchströmrichtung des Rohgasstroms gereinigt zu werden, wobei eine als Strömungsleitvorrichtung ausgebildete Kappe zum Leiten des Druckluftstroms vorhanden ist, wobei die Kappe so angeordnet ist, dass sie über eine Axiallänge des Filterelements in Axialrichtung hervorsteht. Das heißt, dass die Kappe in Axialrichtung aus dem Filterelement herausragt. Dies hat den Vorteil, dass der Druckluftstrom schon vor Erreichen des Filterelements auf den gewünschten Ringquerschnitt bzw. auf den gewünschten mit Druckluft zu beaufschlagenden Innendurchmesser der Filterpatrone aufgeweitet werden kann, so dass der axiale Abstand zwischen einer Druckluftstromquelle und der Filterpatrone verringert werden kann, was sich günstig auf den benötigten axialen Bauraum der gesamten Filteranlage auswirkt. Außerdem bieten sich durch das in Axialrichtung "frühere Aufweiten" Gestaltungsfreiheiten hinsichtlich der Außenform der Kappe, so dass der Druckluftstrom beispielsweise langsamer, d.h. weniger stark, aufgeweitet werden muss, was Vorteile hinsichtlich einer Reduzierung des Energieverlusts beim Aufweiten ergibt.

Zudem ist es zweckmäßig, wenn ein erstes axiales Ende der Kappe in Axialrichtung außerhalb des Filterelements angeordnet ist. So kann in vorteilhafter Weise erwirkt werden, dass der Druckluftstrom schon bei Erreichen des Filterelements auf den gewünschten Durchmesser aufgeweitet ist, so dass auch bei ein Abschnitt des Filterelements an einem ersten axialen Ende, also an einem druckluftstromzugewandten Ende, von dem Druckluftstrom erfasst und dadurch ausreichend abgereinigt werden kann.

Ferner ist es vorteilhaft, wenn ein Außendurchmesser der Kappe von dem ersten axialen Ende der Kappe zu einem zweiten axialen Ende der Kappe, das dem ersten axialen Ende der Kappe gegenüberliegt, zunimmt. Das heißt, dass der Außendurchmesser der Kappe an dem ersten axialen Ende über eine Axiallänge der Kappe gesehen am kleinsten ist und der Außendurchmesser der Kappe an dem zweiten axialen Ende über eine Axiallänge der Kappe gesehen am größten ist. Da der Druckluftstrom zuerst an dem ersten axialen Ende der Kappe auf die Kappe auftrifft, wird der Druckluftstrom durch die sich verbreiternde Außenform der Kappe gezielt nach radial außen geleitet und dadurch aufgeweitet. Durch eine Steigung bzw. durch eine Krümmung der Außendurchmesser-Verbreiterung wird demnach gesteuert, in welche Richtung bzw. auf welchen Strömungsweg der Druckluftstrom geleitet wird.

Weiterhin ist es bevorzugt, wenn das zweite axiale Ende der Kappe in Axialrichtung innerhalb des Filterelements angeordnet ist. Dadurch wird vorteilhafterweise gewährleistet, dass der Druckluftstrom, der entlang der Außenform der Kappe strömt, in den Innenraum der Filterpatrone einströmt und von dort aus die Wände der Filterpatrone erfasst.

Außerdem zeichnet sich ein günstiges Ausführungsbeispiel dadurch aus, dass die Kappe zwei Abschnitte aufweist, wobei ein erster Abschnitt der Kappe in Axialrichtung außerhalb des Filterelements angeordnet ist und ein zweiter Abschnitt der Kappe innerhalb des Filterelements angeordnet ist. Das heißt, dass der erste Abschnitt der Kappe der Teil der Kappe ist, der in Axialrichtung aus dem Filterelement herausragt, während der zweite Abschnitt der Kappe der Teil der Kappe ist, der in Axialrichtung innerhalb des Filterelements angeordnet ist, das heißt, auf der gleichen axialen Höhe wie das Filterelement angeordnet ist. Mit anderen Worten ist die Kappe teilweise in dem Innenraum der Filterpatrone und teilweise außerhalb des Innenraums der Filterpatrone angeordnet. Dadurch kann der Druckluftstrom besonders vorteilhaft zu den Wänden der Filterpatrone, also zu dem Filtermaterial des Filterelements und zu dem Filtermaterial des Filtereinsatzes, geleitet werden. Gleichzeitig kann der Abstand zwischen der Druckluftquelle und der Filterpatrone erheblich verringert werden im Gegensatz zu einer Filterpatrone, bei der die Kappe vollständig innerhalb des Filterelements, also vollständig in dem Innenraum, angeordnet ist.

Zusätzlich ist es von Vorteil, wenn der erste Abschnitt der Kappe und der zweite Abschnitt der Kappe integral, d.h. einstückig, ausgebildet sind. Dadurch lassen sich zum einen die Herstellungskosten der Kappe senken und zum anderen lässt sich das Montageverfahren vereinfachen, da die beiden Abschnitte nicht zueinander ausgerichtet und aneinander montiert werden müssen. Außerdem lässt sich so ein besonders glatter, d.h. nahtloser/stufenloser, Übergang zwischen den beiden Abschnitten realisieren.

Weiterhin ist es auch möglich, wenn der erste Abschnitt der Kappe und der zweite Abschnitt der Kappe separat, d.h. als voneinander getrennte Bauteile, ausgebildet sind. Dadurch wird ermöglicht, dass die beiden Abschnitt separat voneinander montiert werden, z.B. der eine Abschnitt an einem gehäusefesten Bauteil und der andere Abschnitt an der Filterpatrone, so dass erst beim Einsetzen der Filterpatrone in die Filteranlage eine komplette Kappe gebildet wird. Dadurch kann das Austauschen der Filterpatrone erleichtert werden.

Ferner ist es zweckmäßig, wenn der erste Abschnitt der Kappe in Axialrichtung eine Axiallänge hat, die 0,5- bis 1,0-mal so groß wie ein Innendurchmesser des Filterelements ist. So können besonders günstige Strömungsleiteigenschaften erwirkt werden, insbesondere eine Reduzierung des Energieverlusts des Druckluftstroms, da der Druckluftstrom verhältnismäßig sanft aufgeweitet werden kann. Außerdem wird der axiale Vorstand der Filterpatrone so in einem geeigneten Maß gehalten, so dass ein Austauschen der Filterpatrone ermöglicht bleibt.

Darüber hinaus zeichnet sich ein günstiges Ausführungsbeispiel dadurch aus, dass der erste Abschnitt der Kappe eine größere Axiallänge als der zweite Abschnitt der Kappe besitzt. Das heißt, dass ein größerer Teil der Kappe hinsichtlich der axialen Erstreckung außerhalb des Filterelements angeordnet ist. Insbesondere bei Filterpatronen mit einem großen Innendurchmesser kann so ein optimiertes Abreinigungsergebnis erwirkt werden.

Zudem ist es von Vorteil, wenn die Kappe vollständig außerhalb des Filterelements, d.h. in Axialrichtung nicht innerhalb des Filterelements, also nicht auf der gleichen axialen Höhe wie das Filterelement, angeordnet ist. Dadurch kann in vorteilhafter Weise die gesamte Länge des Filterelements abgereinigt werden, weil der Druckluftstrom schon bei Eintreten in die Filterpatrone auf den Durchmesser des Filterelements aufgeweitet ist.

Es ist aber in einer alternativen Ausführungsform auch möglich, dass der erste Abschnitt der Kappe eine kleinere Axiallänge als der zweite Abschnitt der Kappe besitzt. Das heißt, dass ein größerer Teil der Kappe hinsichtlich der axialen Erstreckung innerhalb des Filterelements angeordnet ist. Besonders bei Filterpatronen mit verhältnismäßig kleiner axialer Erstreckung kann dadurch das Abreinigungsergebnis verbessert werden.

Die Aufgabe der Erfindung wird auch durch eine Filteranlage zum Entfernen von Verunreinigungen aus einem zu filternden Rohgasstrom, mit einem Gehäuse, in dem zumindest eine solche Filterpatrone angeordnet ist, und mit einem Drucklufttank, der zumindest eine Düse aufweist und ausgelegt ist, um den Druckluftstrom aus der Düse zum Beaufschlagen des Filtermaterials auszustoßen, gelöst. In der erfindungsgemäßen Filteranlage sind also vorzugsweise mehrere erfindungsgemäße Filterpatronen angeordnet, die zur Abreinigung des Filtermaterials von jeweils einer Düse, die zu der Filterpatrone koaxial, aber in Axialrichtung beabstandet angeordnet ist, mit einem Druckluftstrom, nach Art eines Druckluftstoßes, beaufschlagt werden kann. Durch das Einsetzen der Kappe in der Filterpatrone kann der Abstand zwischen der Düse und der Filterpatrone verringert werden, da der Druckluftstrom, der als Freistrahl mit einem Öffnungswinkel von etwa 12° aus der Düse austritt, zusätzlich durch die Kappe aufgeweitet wird. Dadurch wird das Filtermaterial des Filterelements also auch bei verringertem Abstand so aufgeweitet, dass der Innendurchmesser der Filterpatrone erreicht wird.

Auch ist es bevorzugt, wenn ein Abstand zwischen dem Filterelement und der Düse kleiner als das 2,0-fache, bevorzugt kleiner als das 1,8-fache, weiter bevorzugt kleiner als das 1,5-fache, zudem bevorzugt kleiner als das 1,0-fache, auch bevorzugt kleiner als das 0,5-fache, der Größe des Innendurchmessers des Filterelements ist. Dadurch kann die Filteranlage besonders kompakt in Axialrichtung ausgestaltet werden.

Zudem ist es vorteilhaft, wenn eine Außenform der Kappe sowohl auf den Abstand zwischen der Kappe und der Düse als auch auf den Innendurchmesser des Filterelements abgestimmt ist, so dass der Druckluftstrom so aufgeweitet wird, dass das Filtermaterial des Filterelements von dem Druckluftstrom erfasst wird. Durch geeignete Wahl der Außenform der Kappe kann also der Energieverlust des Druckluftstroms beim Auftreffen auf die Kappe verringert, vorzugsweise minimiert, werden.

Die Aufgabe der Erfindung wird auch durch ein Verfahren zum Reinigen einer solchen Filterpatrone, vorzugsweise in einer solchen Filteranlage, gelöst, wobei ein Druckluftstrom von einer Düse ausgestoßen wird, der danach die Kappe der Filterpatrone anströmt und durch die Außenform der Kappe so aufgeweitet wird, dass er das gesamte Filtermaterial des Filterelements erfasst.

Die Erfindung wird nachfolgend mit Hilfe von Zeichnungen erläutert. Es zeigen:
Fig. 1 eine schematische Längsschnittdarstellung einer Filterpatrone in einem ersten, nicht beanspruchten Ausführungsbeispiel mit einem konischen Filtereinsatz, einem zylindrischen Filterelement und einer innerhalb der Filterpatrone angeordneten Strömungsleitvorrichtung,
Fig. 2 eine schematische Längsschnittdarstellung der Filterpatrone in einem zweiten, nicht beanspruchten Ausführungsbeispiel,
Fig. 3 eine schematische Längsschnittdarstellung der Filterpatrone in einem dritten Ausführungsbeispiel, bei dem die Strömungsleitvorrichtung teilweise in innerhalb der Filterpatrone und teilweise außerhalb der Filterpatrone angeordnet ist,
Fig. 4 eine schematische Längsschnittdarstellung der Filterpatrone in einem vierten, nicht beanspruchten Ausführungsbeispiel mit dem zylindrischen Filterelement und einem zylindrischen Filtereinsatz,
Fig. 5 eine schematische Längsschnittdarstellung der Filterpatrone in einem fünften Ausführungsbeispiel, bei dem die Strömungsleitvorrichtung vollständig außerhalb der Filterpatrone angeordnet ist,
Fig. 6 eine schematische Längsschnittdarstellung der Filterpatrone in einem sechsten Ausführungsbeispiel zwischen dem zylindrischen Filterelement und einem zylindrischen Filtereinsatz aus luftundurchlässigem Material, das als ein Verdrängungskörper dient,
Fig. 7 eine schematische Längsschnittdarstellung der Filterpatrone in einem siebten, nicht beanspruchten Ausführungsbeispiel,
Fig. 8 eine schematische Längsschnittdarstellung der Filterpatrone in einem achten Ausführungsbeispiel, bei dem die Strömungsleitvorrichtung teilweise in innerhalb der Filterpatrone und teilweise außerhalb der Filterpatrone angeordnet ist,
Fig. 9 eine schematische Querschnittsdarstellung der Filterpatrone mit dem konischen Filtereinsatz,
Fig. 10 eine schematische Querschnittsdarstellung, geschnitten im axialen Bereich des Filtereinsatzes, der Filterpatrone mit dem zylindrischen Filtereinsatz aus Filtermaterial,
Fig. 11a eine schematische Längsschnittdarstellung einer geteilten Strömungsleitvorrichtung,
Fig. 11b eine schematische Längsschnittdarstellung der Strömungsleitvorrichtung,
Fig. 12 eine schematische Querschnittsdarstellung der Filterpatrone, geschnitten im Bereich der Strömungsleitvorrichtung,
Fig. 13 eine schematische Längsschnittdarstellung einer erfindungsgemäßen Filteranlage, und
Fig. 14 eine schematische Längsschnittdarstellung der Filteranlage in einem zweiten Ausführungsbeispiel.

Die Figuren sind lediglich schematischer Natur und dienen ausschließlich dem Verständnis der Erfindung. Die gleichen Elemente werden mit denselben Bezugszeichen versehen. Die Merkmale der unterschiedlichen Ausführungsbeispiele können untereinander ausgetauscht werden.

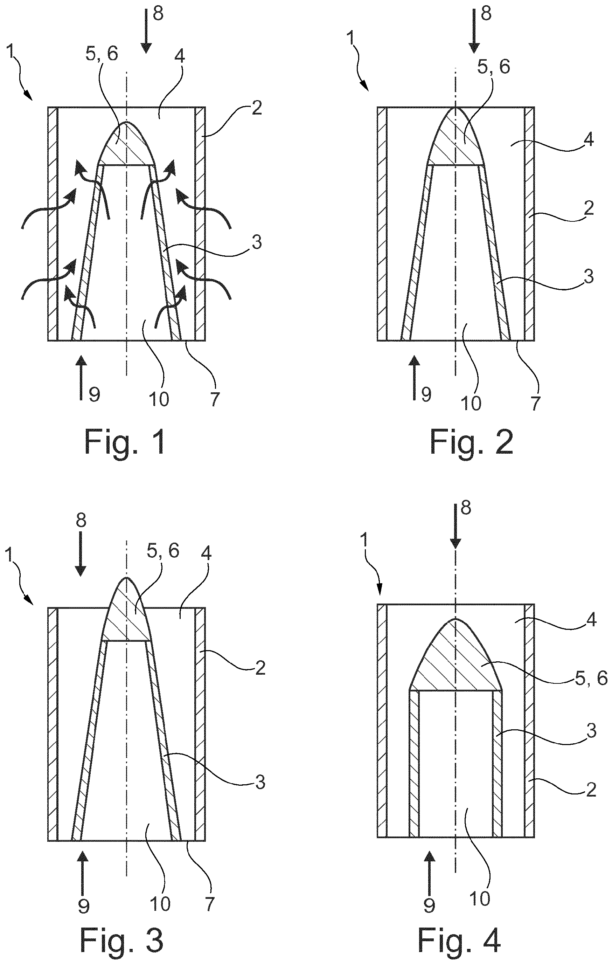

Fig. 1 zeigt eine Filterpatrone 1 zum Entfernen von Verunreinigungen aus einem zu filternden Rohgasstrom. Die Filterpatrone 1 weist ein zylindrisches Filterelement 2 auf, wobei das Filterelement 2 aus Filtermaterial gebildet ist. In dem zylindrischen Filterelement 2 ist ein Filtereinsatz 3 eingesetzt, wobei der Filtereinsatz auch aus Filtermaterial gebildet ist. Das Filterelement 2 und der Filtereinsatz 3 sind koaxial zueinander angeordnet. Innerhalb der Filterpatrone 1 wird also ein Innenraum 4 gebildet, der im Bereich zwischen dem Filterelement 2 und dem Filtereinsatz 3 ringförmig ausgebildet. Das Filtermaterial des Filterelements 2 und des Filtereinsatzes 3 ist so ausgelegt, dass es bei Beaufschlagen mit einem Druckluftstrom, der entgegen einer Durchströmrichtung des Rohgasstroms strömt, gereinigt wird. Die Filterpatrone 1 weist eine als Strömungsleitvorrichtung 5 ausgebildete Kappe 6 auf, die so angeordnet ist und bezüglich ihrer Außenform ausgebildet ist, dass der Druckluftstrom durch die Kappe 6 so aufgeweitet wird, dass das gesamte Filtermaterial des Filterelements 2 vom Druckluftstrom erfasst wird und ein dabei auftretender Energieverlust klein gehalten wird.

Die Kappe 6 ist in dem ersten Ausführungsbeispiel aus Fig. 1 vollständig innerhalb der Filterpatrone 1 angeordnet. Die Kappe 6 ist an dem Filtereinsatz 3 befestigt. Die Kappe 6 weist einen parabelförmigen Querschnitt auf, d.h., dass die Kappe 6 einer Parabel, die um die Längsachse der Parabel rotiert wird, entspricht.

An einem in den Zeichnungen unteren Ende der Filterpatrone 1 ist zwischen dem Filterelement 2 und dem Filtereinsatz 3 ein Filterboden/Ringbauteil 7 angeordnet, das das Filterelement 2 und den Filtereinsatz 3 verbindet. Eine Richtung, die in den Zeichnungen von oben nach unten führt, wird im Folgenden als eine erste Axialrichtung 8 bezeichnet, während eine zur ersten Axialrichtung entgegengesetzte Richtung als eine zweite Axialrichtung 9 bezeichnet wird. Das Ringbauteil/der Filterboden 7 ist luftundurchlässig ausgebildet, so dass der Rohgasstrom außerhalb der Filterpatrone 1 entweder von außen nach innen durch das Filtermaterial des Filterelements 2 oder von einem Innenbereich 10, der radial innerhalb des Filtereinsatzes 3 angeordnet ist, nach außen durch das Filtermaterial des Filtereinsatzes 3 in den Innenraum 4 gelangen kann. Der Strömungsweg des Rohgasstroms ist in Fig. 1 mit Pfeilen angedeutet.

In einem Filterbetrieb der Filterpatrone 1 strömt der Rohgasstrom in den Innenraum 4 der Filterpatrone 1. Zum Abreinigen der Filterpatrone 1 wird eine Rohgasstromzuführung unterbrochen und das Filtermaterial der Filterpatrone 1 wird entgegen der Durchströmrichtung im Filterbetrieb mit Druckluft beaufschlagt. D.h., dass ein Druckluftstrom nach Art eines Druckluftstoßes in Richtung der ersten Axialrichtung 8 strömt und auf die Filterpatrone 1, in den Zeichnungen von oben, auftrifft. Durch die Kappe 6 wird der Druckluftstrom in den ringförmigen Teil des Innenraums 4 geleitet, damit er von innen nach außen durch das Filtermaterial des Filterelements 2 und von außen nach innen durch das Filtermaterial des Filtereinsatzes 3 in den Innenbereich 10 strömt und im dem Filtermaterial festgesetzte Partikel wie zum Beispiel Staub löst. Die gelösten Partikel fallen dann in Schwerkraftrichtung nach unten und werden in einem nicht dargestellten Staubsammelbehälter aufgefangen und entfernt.

In der Filterpatrone 1 in Fig. 1 ist der Filtereinsatz 3 konisch ausgebildet. Der Filtereinsatz 3 weist an seinem der ersten Axialrichtung 8 zugewandten Ende, einem ersten axialen Ende, einen kleineren Außendurchmesser auf als an seinem zweiten axialen Ende, das dem ersten axialen Ende gegenüberliegt. In dem dargestellten Ausführungsbeispiel nimmt der Außendurchmesser von dem ersten axialen Ende zu dem zweiten axialen Ende linear zu, er kann aber auch nichtlinear zunehmen, so dass eine radiale Außenfläche des Filtereinsatzes 3 beispielsweise gekrümmt ausgebildet ist. Auf dem ersten axialen Ende des Filtereinsatzes 3 ist die Kappe 6 angeordnet.

An einer Anlagefläche zwischen dem Filtereinsatz 3 und der Kappe 6 geht der Außendurchmesser der Kappe 6 fließend in den Außendurchmesser des Filtereinsatzes 3 über. Das heißt, dass der Außendurchmesser des Filtereinsatzes 3 an seinem ersten axialen Ende dem Außendurchmesser der Kappe 6 an einem der zweiten Axialrichtung 9 zugewandten Ende, einem zweiten axialen Ende, der Kappe 6 entspricht. Die Kappe 6 nimmt in ihrem Außendurchmesser von ihrem ersten axialen Ende, das dem zweiten axialen Ende gegenüberliegt, bis zu ihrem zweiten axialen Ende zu. In dem dargestellten Ausführungsbeispiel nimmt der Außendurchmesser von dem ersten axialen Ende der Kappe stärker zu, aber mit zunehmender Axiallänge der Kappe 6 schwächer zu. Das heißt, dass die Steigung des Außendurchmessers der Kappe 6 in Axialrichtung (von dem ersten axialen Ende zu dem zweiten axialen Ende hin) abnimmt.

Die Kappe 6 ist in dem dargestellten Ausführungsbeispiel vollständig innerhalb des Innenraums 4 der Filterpatrone 1 angeordnet, d.h., dass sich die Kappe 6 in Axialrichtung nicht bis zu einem der ersten Axialrichtung 8 zugewandten Ende, einem ersten axialen Ende, der Filterpatrone 1 und damit des Filterelements 2 erstreckt. Der Innenraum 4 der Filterpatrone 1 hat also in dem oberen Bereich der Filterpatrone 1 einen kreisförmigen Querschnitt, der durch die Kappe 6 in einen ringförmigen Querschnitt übergeht.

Die Filterpatrone 1 in Fig. 2 unterscheidet sich von der Filterpatrone 1 aus Fig. 1 darin, dass sich die Kappe 6 in Axialrichtung bis zu dem ersten axialen Ende der Filterpatrone 1 erstreckt. Der Innenraum 4 weist also über die gesamte Axiallänge des Filterelements 2 und damit der Filterpatrone 1 einen ringförmigen Querschnitt auf.

Die Filterpatrone 1 in Fig. 3 unterscheidet sich von der Filterpatrone 1 aus Fig. 1 oder Fig. 2 darin, dass sich die Kappe 6 in Axialrichtung bis über das erste axiale Ende der Filterpatrone 1 hinaus erstreckt. Die Kappe 6 ragt also in Axialrichtung aus dem Filterelement 2 heraus. Der Innenraum 4 weist über die gesamte Axiallänge des Filterelements 2 und damit der Filterpatrone 1 einen ringförmigen Querschnitt auf.

In der Filterpatrone 1 in Fig. 4 ist der Filtereinsatz 3 zylindrisch ausgebildet. Das heißt, dass der Filtereinsatz 3 über seine gesamte Axiallänge einen konstanten Außendurchmesser besitzt. Dadurch wird der Innenraum 4 im Bereich der Axiallänge des Filtereinsatzes 3 als ein ringförmiger Innenraum 4 mit konstantem Ringquerschnitt ausgebildet. Die Kappe 6 ist in dem in Fig. 4 dargestellten Ausführungsbeispiel vollständig innerhalb des Innenraums 4 der Filterpatrone 1 angeordnet, d.h., dass sich die Kappe 6 in Axialrichtung nicht bis zu dem ersten axialen Ende der Filterpatrone 1 und damit des Filterelements 2 erstreckt. Der Innenraum 4 der Filterpatrone 1 hat also in dem oberen Bereich der Filterpatrone 1 einen kreisförmigen Querschnitt, der durch die Kappe 6 in einen ringförmigen Querschnitt übergeht.

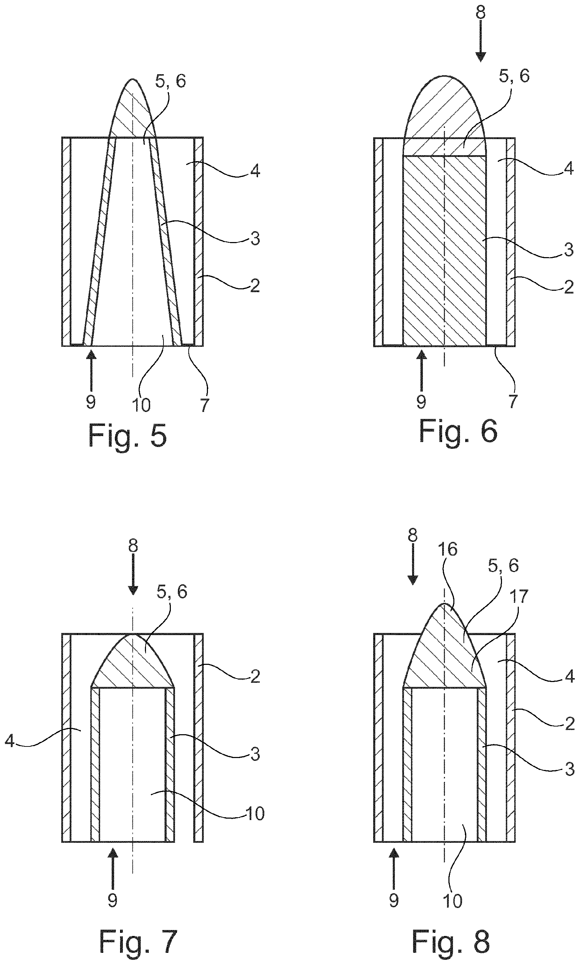

Die Filterpatrone 1 in Fig. 5 unterscheidet sich von der Filterpatrone 1 aus Fig. 3 darin, dass die Kappe 6 vollständig außerhalb der Filterpatrone 1 angeordnet ist. Die Kappe 6 ragt also in Axialrichtung nicht in das Filterelement 2 hinein. In dem in Fig. 5 dargestellten Ausführungsbeispiel schließt die Kappe 6 bündig an einer axialen Stirnseite der Filterpatrone 1 ab, d.h. die Kappe 6 grenzt in Axialrichtung an die Filterpatrone 1 an. Der Filterboden 7 ist als eine Pfanne ausgebildet, in der das Filterelement 2 und der Filtereinsatz 3 über eine Vergussmasse abgedichtet und verbunden werden.

Die Filterpatrone 1 in Fig. 6 unterscheidet sich von der Filterpatrone 1 aus Fig. 8 darin, dass der Filtereinsatz 3 luftundurchlässig ausgebildet ist und als ein Verdrängungskörper dient. Der Filtereinsatz 3 kann dabei wie in Fig. 6 dargestellt als ein Vollkörper oder wie nicht dargestellt als ein Hohlkörper oder schalenartig ausgebildet sein. Durch den als Verdrängungskörper ausgebildeten Filtereinsatz 3 wird das Abreinigungsergebnis verbessert, da der Druckluftstrom nur durch das Filterelement 2 entweichen kann.

Die Filterpatrone 1 in Fig. 7 unterscheidet sich von der Filterpatrone 1 aus Fig. 4 darin, dass sich die Kappe 6 in Axialrichtung bis zu dem ersten axialen Ende der Filterpatrone 1 erstreckt. Der Innenraum 4 weist also über die gesamte Axiallänge des Filterelements 2 und damit der Filterpatrone 1 einen ringförmigen Querschnitt auf. Dabei nimmt der Innendurchmesser des ringförmigen Querschnitts von dem ersten axialen Ende der Filterpatrone 1 bis zu dem ersten axialen Ende des Filtereinsatzes 3 in Abhängigkeit von der Außenform der Kappe 6 zu. Von dem ersten axialen Ende des Filtereinsatzes 3 bis zu dem zweiten axialen Ende der Filterpatrone 1 ist der ringförmige Querschnitt konstant.

In der Filterpatrone 1 in Fig. 8 ist die Kappe 6 so angeordnet, dass ein erster Abschnitt der Kappe 6, der das erste axiale Ende der Kappe 6 enthält, in Axialrichtung aus dem Filterelement 2 herausragt und ein anderer zweiter Abschnitt der Kappe 6, der das zweite axiale Ende der Kappe 6 enthält, innerhalb des Filterelements 2 angeordnet ist. Dabei können der erste Abschnitt und der zweite Abschnitt separat voneinander oder integral ausgebildet sein. Dies wird später näher erläutert.

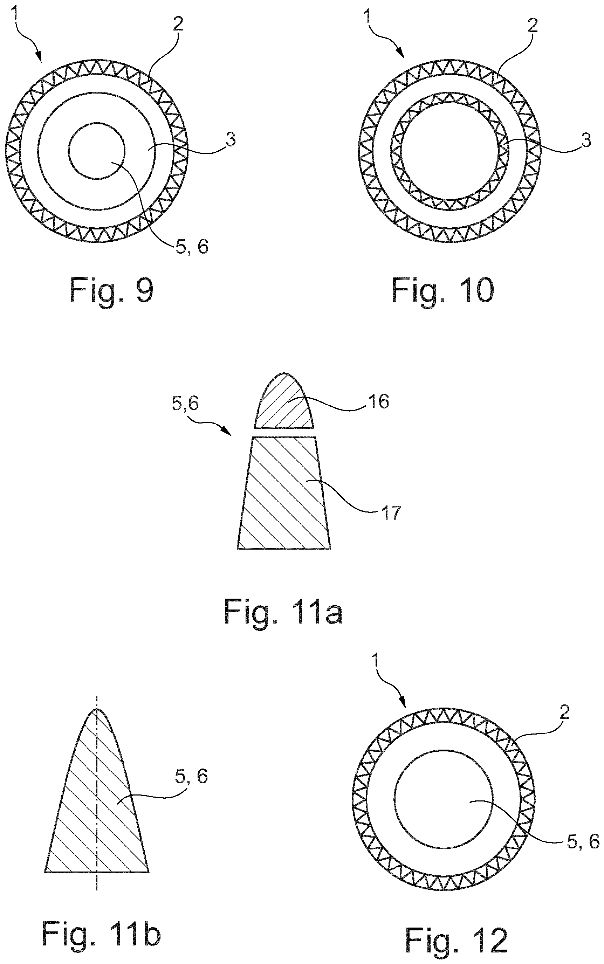

Fign. 9, 10 und 12 zeigen einen Querschnitt der Filterpatrone 1. Das Filterelement 2, der Filtereinsatz 3 und die Kappe 6 sind koaxial zueinander angeordnet. Der Filtereinsatz 3 und die Kappe 6 sind in Axialrichtung übereinander angeordnet, während das Filterelement 2 auf der gleichen axialen Höhe wie der Filtereinsatz 3 und die Kappe 6 angeordnet ist. Der in Fig. 9 dargestellte Querschnitt ist im axialen Bereich der Kappe 6 geschnitten. Das Filterelement 2 besitzt einen größeren Außendurchmesser als der Filtereinsatz 3 und die Kappe 6. Der Filtereinsatz 3 besitzt einen größeren Außendurchmesser als die Kappe 6. Das Filterelement 2 ist aus Filtermaterial hergestellt, das zickzackförmig gefaltet ist, so dass das Filterelement 2 einen sternförmigen Querschnitt aufweist. Auch der Filtereinsatz 3 ist aus zickzackförmig gefaltetem Filtermaterial hergestellt, was in Fig. 10 zu erkennen ist, die einen im axialen Bereich des Filtereinsatzes 3 geschnittenen Querschnitt darstellt. Auch Fig. 12 zeigt einen Querschnitt der Filterpatrone 1, der im axialen Bereich der Kappe 6, aber an einer anderen axialen Position als in Fig. 9, geschnitten ist. Dadurch lässt sich erkennen, dass der Querschnitt der Kappe 6 über die Axialrichtung variiert, während der Querschnitt des Filterelements 2 über die gesamte Axiallänge konstant ist.

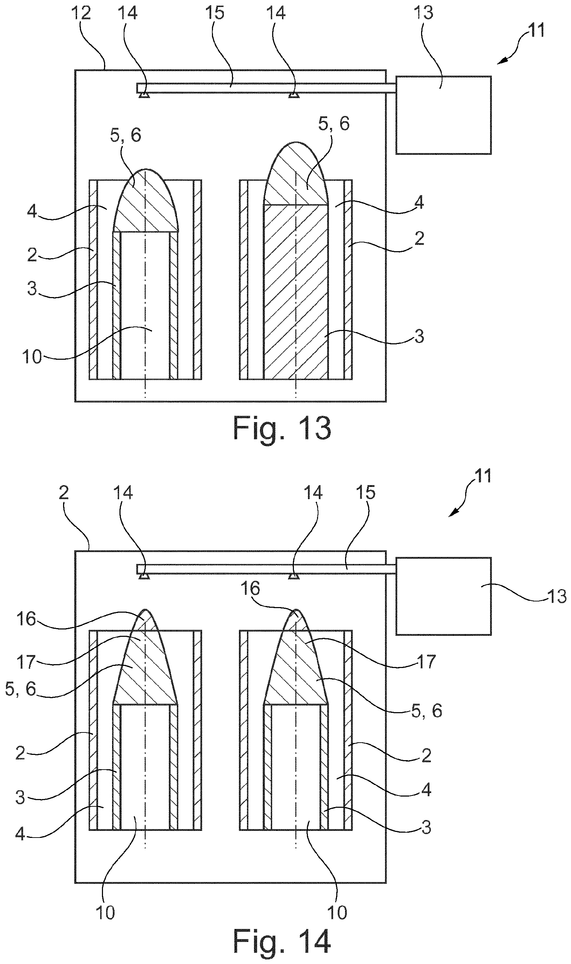

Fig. 11b zeigt eine schematische Darstellung der Kappe 6. Die Kappe 6 weist eine Parabelform bzw. eine Wurzelform auf. Die Kappe 6 ist rotationssymmetrisch. Jeder Längsschnitt durch die Achse der Kappe 6 ist gleich und parabelförmig. Eine Außenform der Kappe 6 nimmt im Außendurchmesser von dem ersten axialen Ende zu dem zweiten axialen Ende hin zu. Die Kappe 6 weist an dem ersten axialen Ende eine eierförmig ausgebildete, d.h. rund ausgebildete, Spitze auf. Die Außenform der kappe 6 ist gekrümmt, wobei die Krümmung an dem ersten axialen Ende am größten ist. Die Krümmung nimmt in Axialrichtung von dem ersten axialen Ende bis zu dem zweiten axialen Ende der Kappe 6 ab. Die Außenform der Kappe 6 folgt im Wesentlichen der Funktion f(x) = x^{1/2} bzw. einer ähnlichen Parabelfunktion folgt. Die Kappe 6 kann als Vollkörper oder als Hohlkörper, d.h. schalenartig, ausgebildet sein. Die Außenform der Kappe 6 ist so ausgebildet, dass sie bei einer senkrechten Anströmung, also einer Anströmung aus der ersten Axialrichtung 8, die Anströmung mit besonders wenig Energieverlust aufweitet. Insbesondere ist die Außenform der Kappe 6 für eine Anströmung im Bereich hoher Geschwindigkeiten bis über Schallgeschwindigkeit optimiert. Die Kappe 6 weist an dem zweiten axialen Ende eine ebene axiale Außenfläche, die senkrecht zu der Achse der Kappe 6 angeordnet ist, auf. Fign. 13 und 14 zeigen eine erfindungsgemäße Filteranlage 11. Filteranlage 11 weist ein Gehäuse 12 auf, in dem zwei Filterpatronen 1 angeordnet sind. Die Filterpatronen 1 sind über nicht dargestellte Halteschienen einschiebbar in dem Gehäuse 12 angebracht. In Fig. 13 sind Filterpatronen 1 gemäß einem Ausführungsbeispiel aus Fig. 6 bzw. Fig. 8 eingesetzt und in Fig. 14 sind Filterpatronen 1 gemäß einem Ausführungsbeispiel aus Fig. 8 mit einer geteilten Kappe 6 gemäß dem Ausführungsbeispiel aus Fig. 11a eingesetzt. Die Erfindung ist aber nicht auf eine Filteranlage 11 mit den in Fig. 13 und 14 dargestellten Filterpatronen 1 beschränkt.

Die Filteranlage 11 weist einen Drucklufttank 13 auf, der wahlweise in dem Gehäuse 12 oder außerhalb des Gehäuses 12 angeordnet ist. Der Drucklufttank 13 ist so ausgelegt, dass er Druckluft, vorzugsweise mit einem Druck von 4 bis 8 bar, über Düsen 14, die über den Filterpatronen 1 angeordnet sind, ausstößt. Der Drucklufttank 13 und die Düsen 14 sind über ein Rohr/eine Blowpipe 15 zum Weitergeben der Druckluft miteinander verbunden. Für jeweils eine Filterpatrone 1 ist eine Düse 14 vorhanden, die jeweils auf der Achse der Filterpatrone 1, aber in Axialrichtung beabstandet angeordnet ist.

Die Außenform der Kappe 6 ist sowohl auf den Abstand zwischen der Düse 14 und dem ersten axialen Ende der Kappe 6 bzw. dem ersten axialen Ende der Filterpatrone 1 als auch auf die Größe des Innenraums 4, insbesondere ein Außendurchmesser des Innenraums 4, also ein Innendurchmesser des Filterelements 2, abgestimmt, damit ein der Druckluftstrom zu dem abzureinigenden Filtermaterial geleitet wird.

In dem in Fig. 14 dargestellten Ausführungsbeispiel ist die Kappe 6 so ausgebildet, dass ein erster Abschnitt 16/ein Endstück 16 in Axialrichtung aus dem Filterelement 2 herausragt und ein zweiter Abschnitt 17/ein Grundkörper 17 innerhalb des Filterelements 2 angeordnet ist. Dadurch wird der Druckluftstrom schon in Axialrichtung näher an der Düse 14 aufgeweitet, so dass ein axialer Abstand zwischen der Düse und der Filterpatrone 1 verringert werden kann.

Der erste Abschnitt 16 und der zweite Abschnitt 17 der Kappe 6 sind integral (vergleiche Fign. 11b und 13) oder separat voneinander (vergleiche Fign. 11a und 14) ausgebildet.

Bei einer separaten Ausbildung (vergleiche Fig. 11a, Fig. 14) ist der erste Abschnitt/das Endstück 16 der Kappe 6 fest mit dem Gehäuse 12 verbunden und der zweite Abschnitt/der Grundkörper 17 der Kappe 6 ist fest mit der Filterpatrone 1 verbunden. Die beiden Abschnitte 16, 17 müssen bei einer separaten Ausbildung nicht miteinander verbunden sein. Es ist ausreichend, wenn die beiden Abschnitte 16, 17 aneinander anliegend oder mit einem geringen Spalt, der beispielsweise kleiner als eine Wanddicke des Filterelements 2 ist, zwischen den beiden Abschnitten 16, 17 angeordnet sind. Der zweite Abschnitt 17 weist also die Form eines Parabelstumpfes auf. Wird in einer Filteranlage 11 aus Fig. 14 eine Filterpatrone 1 ausgetauscht, verbleibt der erste Abschnitt 16 der Kappe 6 in dem Gehäuse 12.

Der zweite Abschnitt 17 der Kappe 6 weist an seinem ersten axialen Ende, das der ersten Axialrichtung 8 zugewandt ist, eine ebene axiale Außenfläche auf. Die (erste) axiale Außenfläche/Endfläche ist kreisförmig und hat denselben Außendurchmesser wie eine axiale Außenfläche/Endfläche des ersten Abschnitts 16. Eine axiale Außenkante/eine Umlaufkante der axialen Endfläche des zweiten Abschnitts 17 der Kappe 6 liegt vollständig in einer Ebene, in der auch eine axiale Endfläche Filterelements 2 angeordnet ist. Das heißt, dass der zweite Abschnitt 17 der Kappe 6 in Axialrichtung bündig mit dem Filterelement 2 abschließt. Der zweite Abschnitt 17 der Kappe 6 nimmt in seinem Außendurchmesser von dem ersten axialen Ende des zweiten Abschnitts 17 bis zu dem zweiten axialen Ende des zweiten Abschnitts 17 zu. Dabei sind radiale Außenflächen des zweiten Abschnitts 17 vorzugsweise leicht nach außen gekrümmt oder linear/eben/gerade ausgebildet.

### Bezugszeichenliste

- 1: Filterpatrone
- 2: Filterelement
- 3: Filtereinsatz
- 4: Innenraum
- 5: Strömungsleitvorrichtung
- 6: Kappe
- 7: Ringbauteil/Filterboden
- 8: erste Axialrichtung
- 9: zweite Axialrichtung
- 10: Innenbereich
- 11: Filteranlage
- 12: Gehäuse
- 13: Drucklufttank
- 14: Düse
- 15: Rohr
- 16: erster Abschnitt/Endstück
- 17: zweiter Abschnitt/Grundkörper

## Patentansprüche

1. Bausatz aus einer Filterpatrone (1) zum Entfernen von Verunreinigungen aus einem zu filternden Rohgasstrom und einem Endstück (16), wobei die Filterpatrone (1) ein zylindrisches Filterelement (2) aus Filtermaterial, einen in das Filterelement (2) eingesetzten Filtereinsatz (3) und einen zwischen dem Filterelement (2) und dem Filtereinsatz (3) gebildeten Innenraum (4) besitzt, wobei das Filtermaterial ausgelegt ist, um bei Beaufschlagen mit einem Druckluftstrom entgegen einer Durchströmrichtung des Rohgasstroms gereinigt zu werden, wobei die Filterpatrone einen Grundkörper (17) einer Strömungsleitvorrichtung (6) aufweist, der eine zum Leiten des Druckluftstroms ausgelegte Oberfläche besitzt, **dadurch gekennzeichnet, dass** der Grundkörper (17) in Zusammenwirken mit dem Endstück (16) die Strömungsleitvorrichtung (6) zum Leiten des Druckluftstroms bildet und einen distalen Endbereich besitzt, der vorbereitet ist, um durch das filterpatronen-separate und an einem externen Gehäuse (12) befestigbare Endstück (16) zur Strömungsleitung des Druckluftstroms vervollständigt zu werden.

2. Bausatz nach Anspruch 1, **dadurch gekennzeichnet, dass** die Oberfläche des Grundkörpers (17) so ausgeformt und angeordnet ist, dass sie in eine Außenoberfläche des Endstücks (16) nahtlos und/oder stufenlos und/oder steigungskonform und/oder krümmungskonform übergeht.

3. Bausatz nach Anspruch 2, **dadurch gekennzeichnet, dass** der Übergang der Oberfläche des Grundkörpers (17) in die Außenoberfläche des Endstücks (16) derart ist, dass die Strömung des Druckluftstroms während des Reinigens an einer Gesamtoberfläche des Grundkörpers (17) und des Endstücks (16) anliegt, um im Reinigungsfall wenigstens 80% des Filtermaterials zu erreichen.

4. Bausatz nach einem der Ansprüche 1 bis 3, **dadurch gekennzeichnet, dass** elektrisch leitende Elemente im Grundkörper (17) zum Erden vorhanden sind, die so ausgelegt sind, dass eine Erdung der Filterpatrone (1) gegenüber einem Gehäuse (12) erfolgt.

5. Bausatz nach Anspruch 4, **dadurch gekennzeichnet, dass** die elektrisch leitenden Elemente als federnde Kontaktelektroden ausgebildet sind.

6. Bausatz nach einem der Ansprüche 1 bis 5, **dadurch gekennzeichnet, dass** der Grundkörper (17) einen Empfänger oder einen Sender mit RFID-Technologie zum Überprüfen einer passenden Filterpatrone (1) und/oder zum Überprüfen einer Positionierung der Filterpatrone (1) aufweist.

7. Bausatz nach einem der Ansprüche 1 bis 6, **dadurch gekennzeichnet, dass** ein Außendurchmesser des Grundkörpers (17) von der ersten axialen Endfläche des Grundkörpers (17) zu einer zweiten axialen Endfläche, die der ersten axialen Endfläche gegenüberliegt, zunimmt.

8. Filteranlage (11) zum Entfernen von Verunreinigungen aus einem zu filternden Rohgasstrom, mit einem Gehäuse (12), in dem zumindest eine Filterpatrone (1) eines Bausatzes nach einem der Ansprüche 1 bis 7 angeordnet ist, und mit einem Endstück (16) des Bausatzes nach einem der Ansprüche 1 bis 7, wobei das Endstück (16) an dem Gehäuse (12) befestigt ist, wobei eine axiale Endfläche des Endstücks (16) einer ersten axialen Endfläche des Grundkörpers (17) der Filterpatrone (1) zugewandt angeordnet ist.

9. Verfahren zum Reinigen einer Filterpatrone (1) eines Bausatzes nach einem der Ansprüche 1 bis 7, vorzugsweise in einer Filteranlage (11) nach Anspruch 8, wobei ein Druckluftstrom von einer Düse (14) eines Drucklufttanks (13) der Filteranlage (1) ausgestoßen wird, der danach die Strömungsleitvorrichtung (6), die den Grundkörper (17) und das Endstück (16) aufweist, anströmt und durch die Außenform der Strömungsleitvorrichtung (6) so aufgeweitet wird, dass er zumindest 80% des Filtermaterials des Filterelements (2) erfasst.

## Claims

1. A kit comprising a filter cartridge (1) for removing impurities from a dirty gas flow to be filtered and an end piece (16), the filter cartridge (1) comprising a cylindrical filter element (2) made from filter material, a filter insert (3) inserted in the filter element (2), and an inner space (4) formed between the filter element (2) and the filter insert (3), with the filter material being designed for being cleaned when a compressed air flow is applied against a flow direction of the dirty gas flow, wherein the filter cartridge comprises a base body (17) of a flow guiding device (6) having a surface designed for guiding the compressed air flow, **characterized in that** the base body (17) forms, in interaction with the end piece (16), the flow guiding device (6) for guiding the compressed air flow and has a distal end zone which is prepared for being completed by the end piece (16) separate from the filter cartridge (1) and mountable to an external housing (12) for flow guiding the compressed air flow.

2. The kit according to claim 1, **characterized in that** the surface of the base body (17) is formed and disposed so that it is transformed seamlessly and/or infinitely and/or in conformity with the slope and/or in conformity with the curvature into an outer surface of the end piece (16).

3. The kit according to claim 2, **characterized in that** the transition of the surface of the base body (17) into the outer surface of the end piece (16) is such that the flow of the compressed air flow during cleaning is adjacent to a total surface of the base body (17) and of the end piece (16) so as to reach at least 80% of the filter material in the case of cleaning.

4. The kit according to one of claims 1 to 3 claim 1, **characterized in that** electrically conducting elements are provided in the base body (17) for grounding, said elements being designed so that the filter cartridge (1) is grounded with respect to a housing (12).

5. The kit according to claim 4, **characterized in that** the electrically conducting elements are in the form of resilient contact electrodes.

6. The kit according to one of claims 1 to 5, **characterized in that** the base body (17) includes a receiver or a transmitter comprising RFID technology for checking a mating filter cartridge (1) and/or for checking positioning of the filter cartridge (1).

7. The kit according to one of claims 1 to 6, **characterized in that** an outer diameter of the base body (17) increases from the first axial end face of the base body (17) to a second axial end face which is opposed to the first axial end face.

8. A filter unit (11) for removing impurities from a dirty gas flow to be filtered, comprising a housing (12) in which at least one filter cartridge (1) of a kit according to one of claims 1 to 7 is arranged, and comprising an end piece (16) of the kit according to one of claims 1 to 7, wherein the end piece (16) is secured to the housing (12), wherein an axial end face of the end piece (16) is disposed to face a first axial end face of the base body (17) of the filter cartridge (1).

9. A method for cleaning a filter cartridge (1) of a kit according to one of claims 1 to 7, preferably within a filter unit (11) according to claim 8, wherein a compressed air flow is ejected from a nozzle (14) of a compressed air tank (13) of the filter unit (1), then approaches the flow guiding device (6) including the base body (17) and the end piece (16) and is widened by the external shape of the flow guiding device (6) so that it covers at least 80% of the filter material of the filter element (2).

## Revendications

1. Kit composé d'une cartouche de filtre (1) pour éliminer des impuretés à partir d'un courant de gaz brut devant être filtré et d'un embout (16), dans lequel la cartouche de filtre (1) possède un élément de filtre cylindrique (2) en matériau de filtre, un insert de filtre (3) inséré dans l'élément de filtre (2) et un espace intérieur (4) formé entre l'élément de filtre (2) et l'insert de filtre (3), dans lequel le matériau de filtre est conçu pour être nettoyé lorsqu'un flux d'air comprimé est appliqué à l'encontre d'une direction de flux du flux de gaz brut, dans lequel la cartouche de filtre présente un corps de base (17) d'un dispositif de conduite d'écoulement (6) qui possède une surface conçue pour guider le flux d'air comprimé, **caractérisé en ce que** le corps de base (17), en coopération avec l'embout (16), forme le dispositif de conduite d'écoulement (6) pour guider le flux d'air comprimé et possède une région d'extrémité distale, qui est préparée, pour être complétée par l'embout (16) séparé de la cartouche de filtre et pouvant être fixé sur un boîtier externe (12) pour la conduite d'écoulement du flux d'air comprimé.

2. Kit selon la revendication 1, **caractérisé en ce que** la surface du corps de base (17) est mise en forme et agencée de telle manière qu'elle se fond de manière ininterrompue et/ou continue et/ou par conformité de pente et/ou par conformité de courbure dans une surface extérieure de l'embout (16).

3. Kit selon la revendication 2, **caractérisé en ce que** la fusion de la surface du corps de base (17) dans la surface extérieure de l'embout (16) est telle que l'écoulement du flux d'air comprimé lors du nettoyage intervient sur toute une surface du corps de base (17) et de l'embout (16), pour atteindre au moins 80 % du matériau de filtre en cas de nettoyage.

4. Kit selon l'une quelconque des revendications 1 à 3, **caractérisé en ce que** des éléments électriquement conducteurs sont présents dans le corps de base (17) pour une mise à la terre, qui sont conçus pour que la cartouche de filtre (1) soit mise à la terre par rapport à un boîtier (12).

5. Kit selon la revendication 4, **caractérisé en ce que** les éléments électriquement conducteurs sont conçus sous forme d'électrodes de contact élastiques.

6. Kit selon l'une quelconque des revendications 1 à 5, **caractérisé en ce que** le corps de base (17) présente un récepteur ou un émetteur à technologie RFID pour vérifier une cartouche de filtre appropriée (1) et/ou pour vérifier un positionnement de la cartouche de filtre (1).

7. Kit selon l'une quelconque des revendications 1 à 6, **caractérisé en ce qu'un** diamètre extérieur du corps de base (17) augmente depuis la première surface d'extrémité axiale du corps de base (17) jusqu'à une seconde surface d'extrémité axiale, qui est opposée à la première surface d'extrémité axiale.

8. Système de filtration (11) pour éliminer des impuretés à partir d'un flux de gaz brut devant être filtré, avec un boîtier (12) dans lequel au moins une cartouche de filtre (1) d'un kit selon l'une quelconque des revendications 1 à 7 est agencée, et avec un embout (16) du kit selon l'une quelconque des revendications 1 à 7, dans lequel l'embout (16) est fixé au boîtier (12), dans lequel une surface d'extrémité axiale de l'embout (16) est agencée en regard d'une première surface d'extrémité axiale du corps de base (17) de la cartouche de filtre (1).

9. Procédé de nettoyage d'une cartouche de filtre (1) d'un kit selon l'une quelconque des revendications 1 à 7, de préférence dans un système de filtration (11) selon la revendication 8, dans lequel un flux d'air comprimé est éjecté d'une buse (14) d'un réservoir d'air comprimé (13) du système de filtration (1), qui traverse alors le dispositif de conduite d'écoulement (6), qui présente le corps de base (17) et l'embout (16), et est élargi par la forme extérieure du dispositif de conduite d'écoulement (6), de sorte qu'il couvre au moins 80 % du matériau de filtre de l'élément de filtre (2).
